# FASCICULE DE BREVET EUROPEEN

(11) **EP 0 338 653 B1**
(45) Date de publication et mention de la délivrance du brevet: **20.04.1994**
(21) Numéro de dépôt: 89201807.8
(22) Date de dépôt: 21.06.1985
(51) Int. Cl.: A01F 25/20

(54) **Dispositif de chargement à système de coupe latéral pour désileuses distributrices**
Ladegerät mit einer seitlich schneidenden Vorrichtung für Siloentnahme- und Verteilergeräte
Loading apparatus with a lateral cutting mechanism for silo unloaders-distributors

(30) Priorité: 25.06.1984 FR 8410181; 21.11.1984 FR 8418000; 21.11.1984 FR 8418001
(43) Date de publication de la demande: 25.10.1989
(62) Demande divisionnaire de: 85401250.7
(73) Titulaire: Etablissements LUCAS G., F-85130 La Gaubretière (FR)
(72) Inventeur: Lucas,Gustave, F-85130 La Gaubretière (FR); Lucas,Gérard, F-85130 La Gaubretière (FR)
(74) Mandataire: Keib, Gérard

(56) Documents cités:
- EP-A- 0 013 058
- EP-A- 0 015 823
- DE-A- 1 756 399
- FR-A- 1 430 701
- FR-A- 2 501 130
- FR-A- 2 537 387
- GB-A- 364 689

## Description

La présente invention concerne un perfectionnement aux désileuses distributrices et plus particulièrement un dispositif de chargement à système de coupe latéral pour de telles désileuses.

La présente demande est une division de la demande européenne 85 401 250.7 (EP-A- 0 169 759).

On connaît d'après le FR-A- 2 501 130 un tel dispositif constitué d'un bras articulé sur une benne, au bout duquel pivote un poussoir tranchant qui fait également office de porte pour obturer la section frontale de chargement de la benne.

La partie inférieure du poussoir tranchant est munie d'un dispositif de coupe permettant de réaliser un front de taille bien net dans la matière ensilée, ce qui favorise sa conservation. De plus, le dispositif de coupe réduit les efforts nécessaires pour le désilage.

Par contre, la séparation latérale entre la matière restant en place et celle emmenée vers la benne par le poussoir tranchant résulte d'un arrachement nécessitant des efforts et produisant une surface de séparation irrégulière.

On connaît des systèmes de désilage de type différent équipés de moyens de coupe latérale.

Selon le DE-A- 2 435 253, la coupe latérale est assurée par des lames à mouvement alternatif dont l'extrémité opposée au front de taille est en porte-à-faux. Ce dispositif est complexe, coûteux et fragile. Selon le FR-A- 2 148 060, le dispositif de coupe latérale n'est plus en porte-à-faux, mais situé à l'extrémité inférieure d'une paroi verticale. Le dispositif est, dans l'ensemble complexe et volumineux. Selon le FR-A- 1 430 701 une désileuse à tambour horizontal rotatif, ou fraise, muni de dents, comporte deux outils de coupe latérale rotatifs, chacun solidaire du tambour à l'une des extrémités du tambour, au-delà du tourillon par lequel le tambour est supporté en rotation.

Il s'agit ici de résoudre un problème qui ne se pose pas avec un poussoir tranchant, c'est-à-dire compléter le déchiquetage latéralement au-delà des bras supportant le tambour, pour éviter que ces bras ne butent contre la matière ensilée compacte. La solution proposée a le mérite d'être simple, mais elle est liée au désilage par fraisage hélas peu satisfaisant en ce qui concerne la netteté du front de taille. On connaît certes d'après les EP-A-0013058, FR-A-2 537 387 et FR-A-2 529 051 divers dispositifs de désilage utilisant des disques de coupe qui ont leurs propres moyens d'entraînement en rotation. Ces disques assurent la coupe soit le long du front de taille en cours de formation, soit horizontalement à la base du bloc en train d'être désilé. De tels disques sont supportés de manière incertaine par des systèmes articulés et les moyens d'entraînement en rotation du disque sont très exposés au contact brutal avec le produit à désiler. De plus ces dispositifs connus sont très complexes, donc coûteux et fragiles.

La demande de brevet européen EP-A-0 047 446 divulgue un système de désilage à disques. Cependant, ces disques sont utilisés pour assurer la découpe frontale et la découpe latérale. Ces disques frontaux sont de plus associés à des moyens situés à l'arrière de ceux-ci et qui ont pour effet de pulvériser la matière pour l'évacuer par l'arrière. La matière n'est donc pas découpée sous forme de bloc mais pulvérisée. Cette pulvérisation entraîne de la poussière, une perte de matière et une perte de qualité alimentaire de la matière.

Le but de la présente invention est de proposer un dispositif de chargement pour désileuse distributrice qui soit simple, robuste, et en même temps capable d'assurer un front de taille net et une coupe latérale nette.

Suivant l'invention, le dispositif de chargement pour désileuse du type à poussoir tranchant disposé à l'extrémité d'un bras de manoeuvre articulé sur une benne de la désileuse, le poussoir tranchant faisant office de porte pour obturer la section frontale de chargement de la benne, et ce poussoir tranchant comportant le long de son bord inférieur un dispositif de coupe, est caractérisé en ce qu'il comporte, sur au moins un flanc du poussoir tranchant, un disque rotatif de découpage latéral, tournant contre le flanc du poussoir tranchant autour d'un axe sensiblement parallèle audit bord inférieur du poussoir tranchant et en ce que le disque est entraîné directement par un moteur hydraulique inséré dans un montant latéral du poussoir tranchant.

Ainsi, la coupe frontale (front de taille) et la coupe latérale sont nets. Ceci est obtenu avec un dispositif très simple et robuste puisque le disque de coupe est supporté directement sur le corps du poussoir tranchant.

D'autres particularités et avantages de l'invention ressortiront encore de la description ci-après.

Aux dessins annexés, donnés à titre d'exemples non limitatifs :
- la figure 1 est une vue de profil, partielle, d'un poussoir tranchant de désileuse selon l'invention, le disque de coupe latéral n'étant pas visible sur cette figure ;
- la figure 2 est une coupe agrandie, selon AA, de l'extrémité du poussoir tranchant ;
- la figure 3 est une vue partielle de face du poussoir tranchant avec une partie de la face avant du caisson écorchée pour montrer les lames et leur entraînement ;
- la figure 4 est une vue schématique de face d'un second mode de réalisation de l'entraînement des lames ;
- la figure 5 est une vue de profil du poussoir tranchant selon l'invention équipé de son système de coupe latéral ;
- la figure 6 est une vue partielle de face du poussoir tranchant montrant le système de coupe latéral ; et
- la figure 7 montre un silo, en vue de dessus, après le prélèvement par le poussoir tranchant, d'un paquet de produit ensilé.

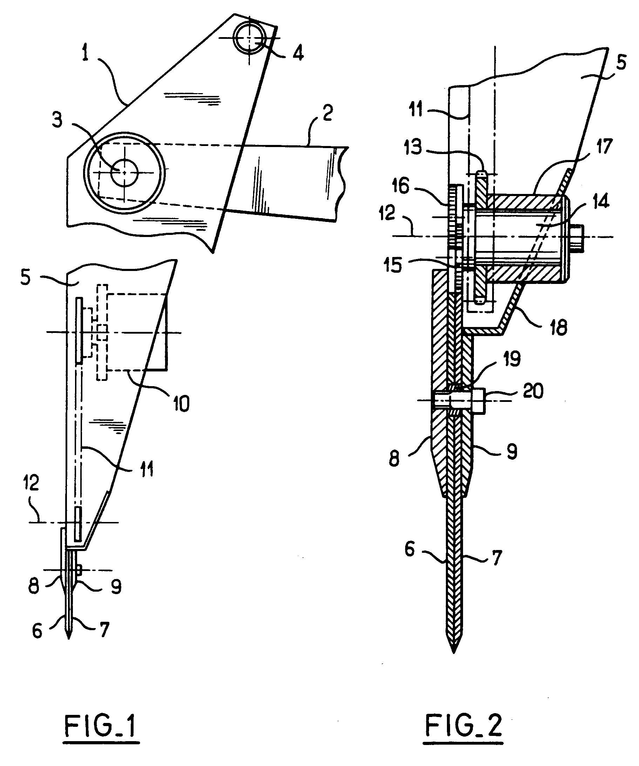

Tel que représenté, figure 1, le dispositif de chargement est constitué du poussoir tranchant 1 articulé sur le bras de manoeuvre 2 par l'intermédiaire de l'axe 3. Le mouvement du poussoir tranchant par rapport au bras est assuré de façon classique par un vérin non représenté articulé en 4 à l'extrémité supérieure du poussoir tranchant, au-dessus de l'axe 3. Le bras 2 est lui-même articulé sur la benne de la désileuse, non représentée.

Le poussoir tranchant 1 comprend un caisson 5 constitué d'éléments mécano-soudés ; ce caisson, sous l'axe 3, a une section en forme de V très effilé et il fait office de porte pour obturer la section frontale de chargement de la benne de la désileuse, pendant les opérations de transport de produits tirés du silo et pendant la distribution de ces mêmes produits au bétail.

L'extrémité du caisson comporte deux lames 6 et 7 adossées l'une à l'autre ; ces lames sont enserrées entre deux guides 8 et 9 biseautés qui prolongent la partie extrême du caisson.

La conformation des lames 6 et 7 est décrite dans la demande de brevet européen EP-A- 0 169 759 bénéficiant des mêmes dates de priorité et de dépôt que la présente demande. Les lames 6 et 7 sont animées d'un mouvement alternatif contraire au moyen d'un système de commande logé dans le caisson 1. Ce système de commande est constitué d'un moteur hydraulique 10 disposé dans la partie supérieure, plus large, du caisson, et d'une chaîne de transmission 11 entre le moteur hydraulique 10 et l'organe de commande des lames 6 et 7 ; l'organe de commande desdites lames est centré sur l'axe 12, à la partie inférieure du caisson 1, au-dessus desdites lames. Le moteur hydraulique 10 est disposé à la partie supérieure du caisson pour pouvoir être logé totalement, ou presque, à l'intérieur dudit caisson. Le caisson constitue également un carter de protection de la chaîne 11 entre le moteur hydraulique et le pignon 13 solidaire de l'arbre 14 ; cet arbre 14 constituant, avec les deux excentriques 15 et 16 l'organe de commande des lames, centré sur l'axe 12. L'arbre 14 tourillonne dans une douille 17 solidaire de la partie extrême 18 du caisson 5 et qui, sur la figure 2, dépasse légèrement sur la face interne du caisson 5. La partie extrême 18 du caisson est renforcée pour soutenir la douille 17 d'une part, et les guides 8 et 9, d'autre part. Le guide 8 est fixé sur la paroi extérieure du caisson 5 et il est affiné et biseauté pour ne pas détériorer le front de coupe des lames 6 et 7. Le guide 9 est fixé sous la partie extrême 18 et il est effilé et biseauté comme le guide 8. Les deux guides sont maintenus écartés par des cales 19 qui assurent en même temps le guidage des lames 6 et 7, et ils sont serrés sur lesdite cales au moyen de vis 20. L'assemblage des guides 8 et 9 doit être suffisamment résistant pour offrir une bonne tenue à la flexion lors de l'introduction des produits dans la benne de la désileuse.

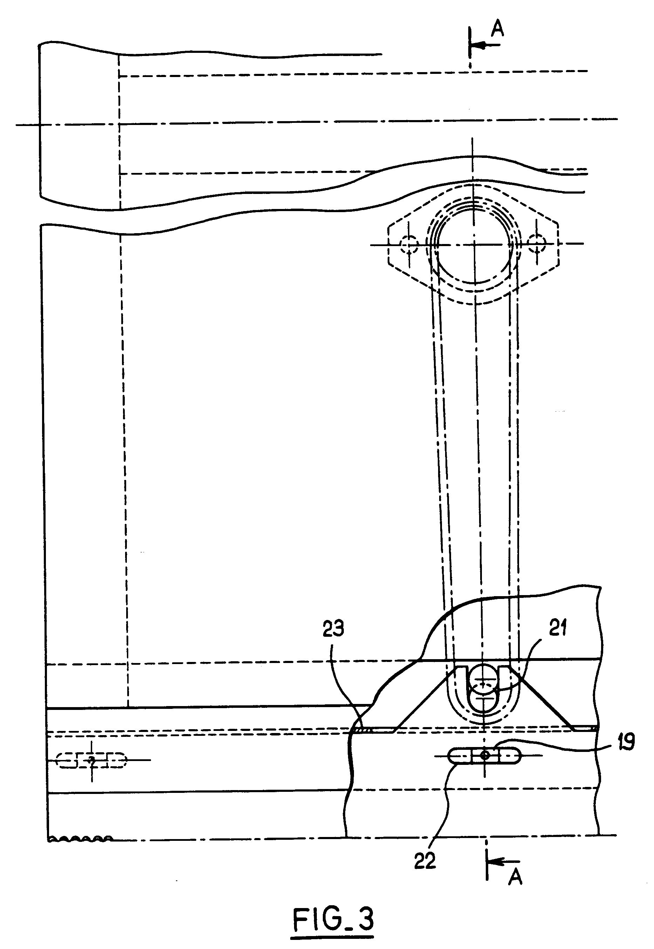

Les lames apparaissent dans la vue de face, figure 3. Ces lames comportent, chacune, dans la partie centrale, une excroissance 21 munie d'une ouverture en forme de U, dans laquelle viennent se loger, respectivement, les excentriques 15 et 16 solidaires de l'arbre 14. Pendant leur mouvement alternatif, les lames 6 et 7 sont guidées par les cales 19 qui sont situées dans des lumières 22 ménagées dans le corps. Le nombre de cales 19 varie selon la largeur du poussoir tranchant. Les lames 6 et 7 peuvent également être en appui sous la bordure 23 de la partie extrême du caisson 5.

Les lames 6 et 7 ont la même largeur que le poussoir tranchant et sont donc actives sur toute la largeur du poussoir tranchant ; leur denture est adaptée au produit à désiler.

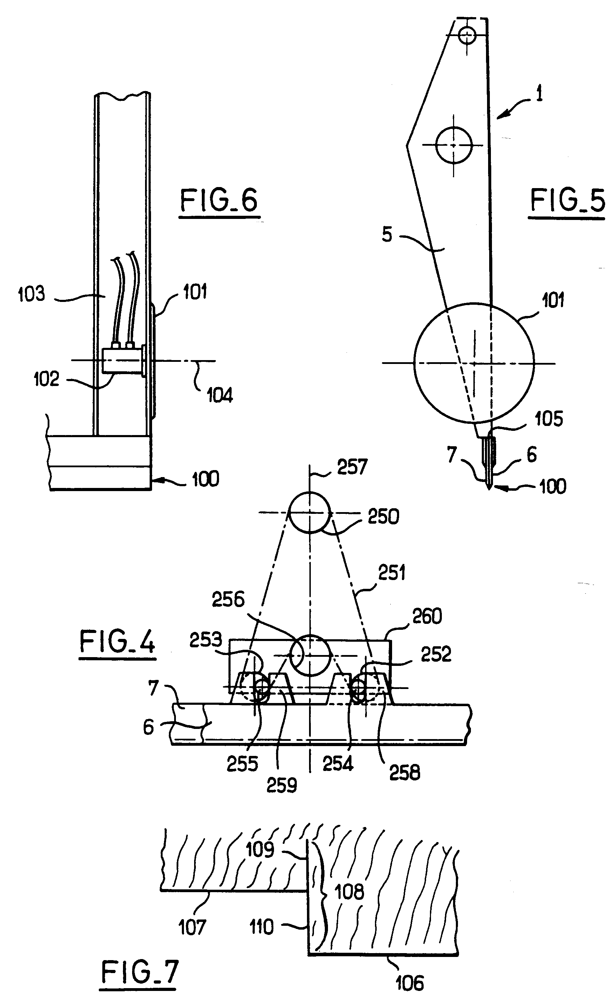

La figure 4 présente le système d'entraînement des lames 6 et 7 qui est logé dans l'épaisseur du poussoir tranchant 1.

Ce système d'entraînement est constitué d'un pignon moteur 250 entraîné par dispositif hydraulique, d'une chaîne de transmission 251, de deux pignons 252 et 253 solidaires d'excentriques 254 et 255 et d'un pignon 256 d'enroulement de la chaîne 251 sur les deux pignons 252 et 253. Les deux pignons 252 et 253 sont disposés de part et d'autre du plan 257 passant par l'axe du pignon moteur 250 et du pignon d'enroulement 256.

Les lames 6 et 7 comportent des guides 258 et 259, en forme de U ouvert vers le haut, qui reçoivent les excentriques 254 et 255.

Pour faciliter le montage du système d'entraînement, il est prévu de fixer sur une même platine 260, les deux pignons 252 et 253 munis des excentriques et le pignon 256 d'enroulement. Cette disposition permet d'intégrer plus facilement sur le poussoir tranchant 1, non seulement le système de coupe frontale qui vient d'être décrit mais également le système de coupe latéral qui sera décrit plus loin en référence à la figure 5.

Les pignons 252 et 253 sont disposés en partie basse de la platine 260 ; le pignon d'enroulement 256 est disposé sensiblement au centre de la platine. L'espace entre les deux pignons 252 et 253 est du même ordre que le diamètre extérieur du pignon d'enroulement 256. L'épaisseur des pignons 252, 253 avec leurs excentriques 254, 255, est réduite au maximum pour permettre leur intégration dans la partie basse effilée du caisson du poussoir tranchant. La course de chaque lame 6 et 7, est sensiblement supérieure au pas de leur denture ; en bout de course, les extrémités des lames 6 et 7 sont décalées d'une dimension sensiblement égale à deux fois le pas P, ce qui permet en fait, pour la découpe, un recouvrement relatif de deux dents, les unes par rapport aux autres.

Comme le montre la figure 5, le poussoir tranchant 1 comporte en outre un disque rotatif 101 disposé latéralement en partie basse et contre le caisson 5. Le disque déborde largement de chaque côté du caisson 5, réalisant ainsi une découpe latérale verticale, de part et d'autre du plan de découpe frontal réalisé au moyen du couteau 100. Le disque 101 comporte, selon les produits ensilés, une périphérie lisse ou dentelée tranchante : la périphérie peut coopérer avec un contre-fer qui décrasse en permanence le disque dont la vitesse de rotation est de l'ordre de 200 tours/mn.

Le disque 101 est entraîné, directement, par un moteur hydraulique 102, figure 6, logé dans l'épaisseur du caisson 5 du poussoir tranchant 1. Ce moteur hydraulique 102 est plus particulièrement logé dans le montant latéral 103 du poussoir tranchant 1.

L'axe de rotation 104 du moteur hydraulique 102 et du disque 101 est disposé nettement au-dessus de la bordure supérieure 105 des lames 6 et 7, à une distance légèrement plus grande que le rayon du disque 101, pour éviter les interférences entre les extrémités de lames 6 et 7 et le disque 101. On peut toutefois placer la périphérie du disque 101 au niveau du tranchant du couteau 100 ; dans ce cas, les lames 6 et 7 ne doivent pas déborder du caisson 5.

La figure 7 montre les fronts de coupe obtenus par le couteau 100, d'une part, et le disque 101 d'autre part, sur un silo 106 de produit du genre maïs ou herbe.

Le couteau 100 réalise un front de coupe 107 vertical dont la dimension est au mieux égale à la longueur dudit couteau 100. Le disque 101 réalisé un front de coupe latéral 108, vertical et perpendiculaire au front de coupe 107 du couteau 100. Ce front de coupe latéral 108 se divise en deux parties : une partie qui constitue une découpe d'attente dans le silo ; elle n'apparaît que sous la forme d'un trait 109, et une partie 110 qui constitue le front de coupe latéral visible. Le front de coupe 108 a une dimensiosn de l'ordre du diamètre du disque 101.

Le trait de découpe 110 visible sur le silo 106 correspond à la trace de la partie débordante du disque 101, en avant du caisson 5 du poussoir tranchant 1.

La combinaison du couteau 100 et du disque 101 permet le découpage de paquets de produit. On peut toutefois prélever, selon la course du poussoir tranchant 1, plusieurs paquets successifs, sans déplacer la benne.

## Revendications

1. Dispositif de chargement pour désileuse du type à poussoir tranchant (1) disposé à l'extrémité d'un bras de manoeuvre articulé sur une benne de la désileuse, le poussoir tranchant (1) faisant office de porte pour obturer la section frontale de chargement de la benne, et ce poussoir tranchant (1) comportant le long de son bord inférieur un dispositif de coupe, caractérisé en ce qu'il comporte, sur au moins un flanc du poussoir tranchant (1), un disque rotatif (101) de découpage latéral, tournant contre le flanc du poussoir tranchant autour d'un axe (104) sensiblement parallèle audit bord inférieur du poussoir tranchant et en ce que le disque (101) est entraîné directement par un moteur hydraulique (102) inséré dans un montant latéral (103) du poussoir tranchant.

2. Dispositif de chargement pour désileuse selon la revendication 1, caractérisé en ce que le disque (101) est un disque tranchant lisse.

3. Dispositif de chargement pour désileuse selon la revendication 1 caractérisé en ce que le disque (101) est un disque tranchant muni d'une denture.

4. Dispositif de chargement pour désileuse selon l'une des revendications 1 à 3, caractérisé en ce que le poussoir tranchant (1) comporte un contre-fer coopérant avec le disque (101).

5. Dispositif de chargement pour désileuse selon l'une des revendications 1 à 4, caractérisé en ce que l'axe de rotation (104) du disque (101) est situé à une distance d'une bordure supérieure (105) d'au moins une lame (6, 7) du dispositif de coupe, sensiblement supérieure au rayon dudit disque (101).

6. Dispositif de chargement pour désileuse selon la revendication 5, caractérisé en ce que la lame (6, 7) du dispositif de coupe s'étend sur sensiblement toute la largeur du poussoir tranchant (1).

7. Dispositif de chargement pour désileuse selon l'une des revendications 1 à 4, caractérisé en ce que l'axe de rotation (104) du disque (101) présente par rapport à une arête tranchante d'un couteau (100) du dispositif de coupe une distance sensiblement égale au rayon dudit disque (101).

8. Dispositif de chargement pour désileuse selon l'une des revendications 1 à 7, caractérisé en ce que le diamètre du disque (101) est de l'ordre du tiers de la longueur du dispositif de coupe.

9. Dispositif de chargement pour désileuse selon l'une des revendications 1 à 8, caractérisé en ce que le disque (101) déborde de part d'autre du poussoir tranchant (1).

## Claims

1. A loading device for a means for removing the contents from a silo and of the kind comprising a cutting push rod (1) disposed at the end of an operating arm pivoted to a skip belonging to the removing means, the cutting push rod (1) serving as a gate for blocking the front loading portion of the skip, and the cutting push rod (1) comprising a cutting device along its bottom edge, the loading device being characterised in that, along at least one side of the cutting push rod (1), it comprises a rotary disc (101) for lateral cutting and rotating against the side of the cutting push rod around an axis (104) substantially parallel to the bottom edge of the cutting push rod, and characterised in that the disc (101) is driven directly by a hydraulic motor (102) inserted into a lateral upright (103) belonging to the cutting push rod.

2. A loading device for a means for removing contents from a silo according to claim 1, characterised in that the disc (101) is a smooth cutting disc.

3. A loading device for a means for removing contents from a silo according to claim 1, characterised in that the disc (101) is a toothed cutting disc.

4. A device for loading a means for removing contents from a silo according to any of claims 1 to 3, characterised in that the cutting push rod (1) comprises a back-iron co-operating with the disc (101).

5. A device for loading a means for removing contents from a silo according to any of claims 1 to 4, characterised in that the axis (104) of the disc (101) is situated at a distance from the top edge (105) of at least one blade (6, 7) of the cutting device, the distance being substantially greater than the radius of the disc (101).

6. A loading device for a means according to claim 5, characterised in that the blade (6, 7) of the cutting device extends over substantially the entire width of the cutting push rod (1).

7. A loading device for a means according to any of claims 1 to 4, characterised in that the axis (104) of the disc (101) is at a distance from a cutting edge of a knife (100) of the cutting device, the distance being substantially equal to the radius of the disc (101).

8. A loading device for a means according to any of claims 1 to 7, characterised in that the diameter of the disc (101) is about one-third of the length of the cutting device.

9. A loading device for a means according to any of claims 1 to 8, characterised in that disc (101) extends on either side of the cutting push rod (1).

## Patentansprüche

1. Ladevorrichtung für Siloentleerer mit einem Schneidschieber (1), der am Ende eines an einem Kübel des Siloentleerers angelenkten Manövrierarms angebracht ist, welcher Schneidschieber (1) als Tür zum Versperren des Ladefrontquerschnitts des Kübels dient, und welcher Schneidschieber (1) längs seinem unteren Rand eine Schneidvorrichtung aufweist, dadurch gekennzeichnet, daß sie an mindestens einer Flanke des Schneidschiebers (1) eine drehbare Scheibe (101) für seitliches Schneiden umfaßt, die gegen die Flanke des Schneidschiebers um eine zu dem genannten unteren Rand des Schneidschiebers im wesentlichen parallele Achse (104) umläuft, und daß die Scheibe (101) unmittelbar von einem Hydraulikmotor (102) angetrieben ist, der in eine seitliche Strebe (103) des Schneidschiebers eingefügt ist.

2. Ladevorrichtung für Siloentleerer nach Anspruch 1, dadurch gekennzeichnet, daß die Scheibe (101) eine Scheibe mit glatter Schneide ist.

3. Ladevorrichtung für Siloentleerer nach Anspruch 1, dadurch gekennzeichnet, daß die Scheibe (101) eine mit einer Zähnung versehene Schneidscheibe ist.

4. Ladevorrichtung für einen Siloentleerer nach einem der Ansprüche 1 bis 3, dadurch gekennzeichnet, daß der Schneidschieber (1) eine mit der Scheibe (101) zusammenwirkende Gegenschneide umfaßt.

5. Ladevorrichtung für Siloentleerer nach einem der Ansprüche 1 bis 4, dadurch gekennzeichnet, daß die Drehachse (104) der Scheibe (101) sich in einem Abstand von einer oberen Kante (105) von wenigstens einer Schneide (6, 7) der Schneidvorrichtung erstreckt, der deutlich größer ist als der Radius der Scheibe (101).

6. Ladevorrichtung für Siloentleerer nach Anspruch 5, dadurch gekennzeichnet, daß die Schneide (6, 7) der Schneidvorrichtung sich im wesentlichen über die gesamte Breite des Schneidschiebers (1) erstreckt.

7. Ladevorrichtung für Siloentleerer nach einem der Ansprüche 1 bis 4, dadurch gekennzeichnet, daß die Drehachse (104) der Scheibe (101) sich in einem Abstand von einer Schneide eines Messers (100) der Schneidvorrichtung befindet, der im wesentlichen gleich dem Radius der Scheibe (101) ist.

8. Ladevorrichtung für Siloentleerer nach einem der Ansprüche 1 bis 7, dadurch gekennzeichnet, daß der Durchmesser der Scheibe (101) in der Größenordnung eines Drittels der Länge der Schneidvorrichtung ist.

9. Ladevorrichtung für Siloentleerer nach einem der Ansprüche 1 bis 8, dadurch gekennzeichnet, daß die Scheibe (101) beidseits den Schneidschieber (1) überragt.
